# EUROPÄISCHE PATENTSCHRIFT

(11) **EP 0 515 601 B1**
(45) Veröffentlichungstag und Bekanntmachung des Hinweises auf die Patenterteilung: **26.04.1995**
(21) Anmeldenummer: 91920754.8
(22) Anmeldetag: 10.12.1991
(51) Int. Cl.: G02B 23/02

(54) **DOPPEL-REFLEKTOR**
DOUBLE REFLECTOR
REFLECTEUR DOUBLE

(30) Priorität: 13.12.1990 DE 4039878
(43) Veröffentlichungstag der Anmeldung: 02.12.1992
(73) Patentinhaber: Angstenberger, Karl Friedrich, Dipl.-Ing., D-67227 Frankenthal (DE); Hügenell, Hermann, D-67245 Lambsheim (DE)
(72) Erfinder: HÜGENELL, Hermann, D-6715 Lambsheim (DE)
(74) Vertreter: Bosshard, Ernst
(86) Internationale Anmeldenummer: CH9100260
(87) Internationale Veröffentlichungsnummer: WO9210776

(56) Entgegenhaltungen:
- DE-A- 1 940 657
- SPIE, Band. 1013, 1988 (Washington) Andre Masson et al: "Optical DesignMethods, Applications, and Large Optics", pp 241-248
- Physikalische Blätter, Band. 44, Nr. 12, 1988 Von F. Merkle: "Aktive undadaptive Optik in der Astronomie", pp 439-446

## Beschreibung

Die Erfindung betrifft einen Doppel-Reflektor der im Oberbegriff des Anspruchs 1 angegebenen Art.

Ein derartiger Doppel-Reflektor ist aus der DE-OS 19 40 657 bekannt. Bei diesem bekannten Doppel-Reflektor sind die Primärspiegel ebenso wie der Sekundär-Umlenkspiegel monolithisch rotationssymmetrisch ausgebildet, was insofern nachteilig ist, als derartige Spiegel systembedingt durchmesserbegrenzt sind. Nachteilig ist außerdem das Vorsehen eines einzigen rotationssymmetrischen Sekundär-Umlenkspiegels, weil dieser durch die gemeinsame Fokussierung die effektive Lichtintensität vermindert. Weiterhin ist der Sekundär-Umlenkspiegel nicht in das Echtzeit-Meß- und Kompensationssystem mit einbezogen, was sich auf die erzielbare Bildgüte ungünstig auswirkt.

Aus der Veröffentlichung SPIE Vol. 1013 "Optical Design Methods, Applications, and Large Optics", (1988), Seiten 241-248, ist ein Zentralachsen-Reflektor mit einem Primärspiegel eines Durchmessers von 20 m bekannt. Realisiert ist dieser sehr große, auch als Off-Axis-Reflektor einsetzbare Primärspiegel aus einer Vielzahl von aneinander gesetzten Einzelsegmenten.

Aus der Veröffentlichung Phys. B1. 44 (1988) Nr. 12, Seiten 439-446, ist ein Großteleskop mit einem Primärspiegel bekannt, der zur Korrektur der Wellenfront mit Hilfe von Aktuatoren deformierbar ist, wobei entsprechende adaptive Kompensationsmaßnahmen in Echtzeit erfolgen.

Der Erfindung liegt die Aufgabe zugrunde,
einen Doppel-Reflektor der eingangs genannten Art mit Bezug auf die wirksame Lichtintensität und die Bildgüte zu verbessern.

Gelöst wird diese Aufgabe durch die kennzeichnenden Merkmale des Anspruchs 1. Vorteilhafte Weiterbildungen der Erfindung sind in den abhängigen Ansprüchen angegeben.

Die Erfindung erbringt dadurch einen Gewinn an Lichtintensität, daß jedem Primärspiegel-Segment ein eigenes Sekundärspiegel-Segment zugeordnet ist, das in seiner Form an das jeweilige Primärspiegel-Segment angepaßt ist. Eine verbesserte Bildgüte wird erfindungsgemäß dadurch erreicht, daß auch die Sekundärspiegel-Segmente in das Echtzeit-Meß- und Kompensationssystem mit einbezogen sind, so daß sowohl die Primärspiegel-Segmente wie auch die Sekundärspiegel-Segmente separat justierbar sind.

Zur Reduzierung der Eigenmasse der Einzelspiegel ist es gemäß einer vorteilhaften Weiterbildung der Erfindung vorgesehen, daß diese eine mit Hohlräumen versehene Tragstruktur aufweisen. Eine reduzierte Spiegeleigenmasse wirkt sich außerdem vorteilhaft auf die Justierbarkeit der Spiegel und damit auf die mit dem Doppel-Reflektor erzielbare Bildgüte aus. Diesbezüglich von Vorteil ist auch eine gezielte Kühlung der Spiegel durch in den Hohlräumen zirkulierendes Kühlmittel. Ebenfalls vorteilhaft für die erzielbare Bildgüte ist die Weiterbildung der Erfindung, demnach sämtliche Spiegel ebenso wie alle Betriebs- und Hilfsmittel auf einem gemeinsamen, selbsttragenden Träger angeordnet sind, der großflächig in einer Wanne hydrostatisch um seine Elevationsachse und die gemeinsame optische Achse drehbar gelagert ist.

Nachfolgend wird die Erfindung anhand eines in der Zeichnung dargestellten Ausführungsbeispieles weiter beschrieben. Hierbei wird der Doppel-Reflektor als Spiegelteleskop eingesetzt.
- Fig. 1: zeigt schematisch einen Vertikalquerschnitt durch ein Spiegelträgersystem eines Spiegelteleskopes mit zwei Off-Axis-Hyperbol-Reflektoren;
- Fig. 2: zeigt schematisch eine Draufsicht auf das Spiegelträgersystem gemäß Fig. 1;
- Fig. 3 und Fig. 4: zeigen jeweils schematisch einen Querschnitt durch die Spiegel des Spiegelträgersystems gemäß Fig. 1 und 2 mit unterschiedlichen Spiegelanordnungen;
- Fig. 5 und Fig. 6: zeigen jeweils schematisch Einzelheiten der Spiegelanordnung gemäß Figur 4;
- Fig. 7: zeigt eine perspektivische, teilweise geschnittene Darstellung des Spiegelträgersystems gemäß Fig. 1 und 2, wie dies auch für andere Reflektoroberflächenkrümmungen Verwendung findet;
- Fig. 8: zeigt schematisch in perspektivischer, teilweise geschnittener Gesamtansicht ein Spiegelteleskop und
- Fig. 9 bis 11: zeigen jeweils Einzelheiten A, B und C der Lagerung gemäß Fig. 8.

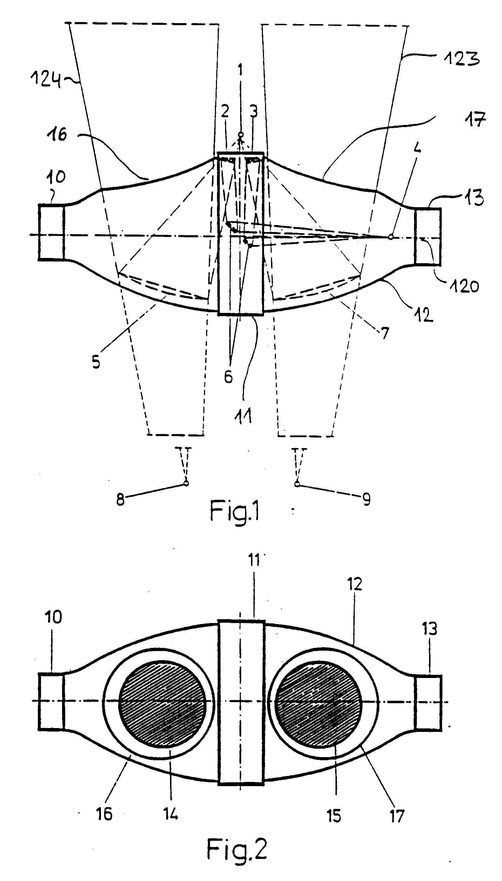

Fig. 1 veranschaulicht ein Spiegelträgersystem 12 eines Spiegelteleskopes am Beispiel zweier Off-Axis-Hyperbol-Reflektoren, welches zwei Primärspiegel (Objektiv) 5 und 7 aufweist. Es handelt sich um ein sog. Großteleskop, bei welchem jeder Primärspiegel 5, 7 einen Durchmesser von mehr als 8 m hat. Eine optimale Anpassung an den bekannten Beugungseffekt der die Erde umspannenden Atmosphäre wird mit Apertur-Durchmessern von ca. 15 m erreicht.

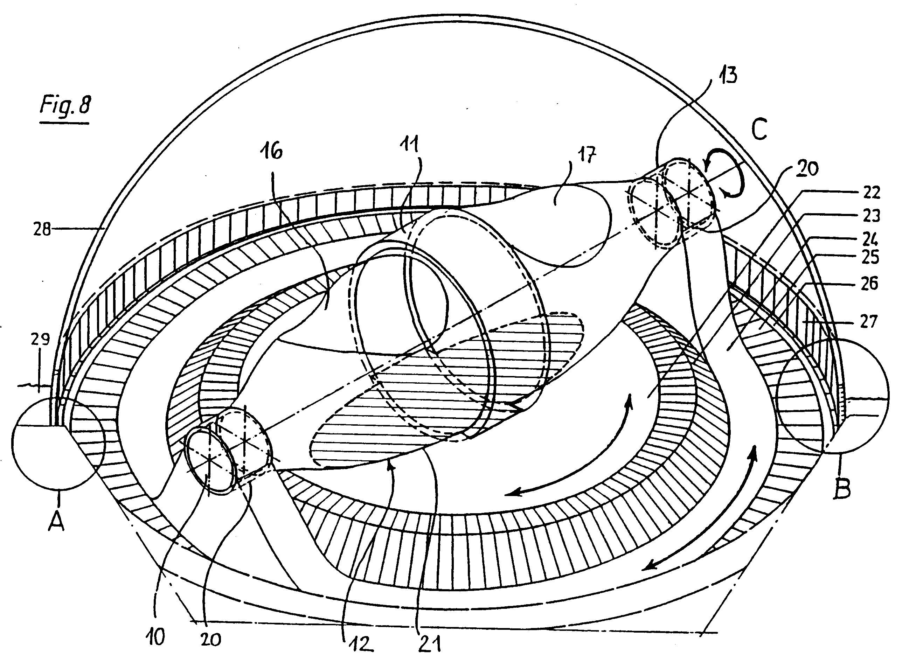

Das Spiegelträgersystem 12 ist einerseits um die Elevationsachse 120 und andererseits um die Elongationsachse drehbar gelagert. Um die Darstellung übersichtlich zu halten, sind in der Figur 1 die ortsfesten Lagervorrichtungen, auf welchen sich das Spiegelträgersystem abstützt, nicht wiedergegeben. Sie sind in den Figuren 8 bis 11 im einzelnen beschrieben.

Das Spiegelträgersystem 12 weist ein geschlossenes, im wesentlichen selbsttragendes, spindelförmiges Gehäuse auf, das mit zwei nebeneinander liegenden Öffnungen 16, 17 für den Strahleneinfall in das Innere auf die beiden Primärspiegel 5, 7 versehen ist. Außerdem weist das Spiegelträgersystem 12 konzentrisch zur Elevationsachse 120 jeweis endseitig einen Kreiszylinder 10, 13 auf, dessen Außenmantel jeweils zur reibungsarmen Lagerung für die Rotationsbewegung um die Elevationsachse 120 dient und über dessen Innenräume jeweils ein Zugang in das Gehäuse möglich ist.

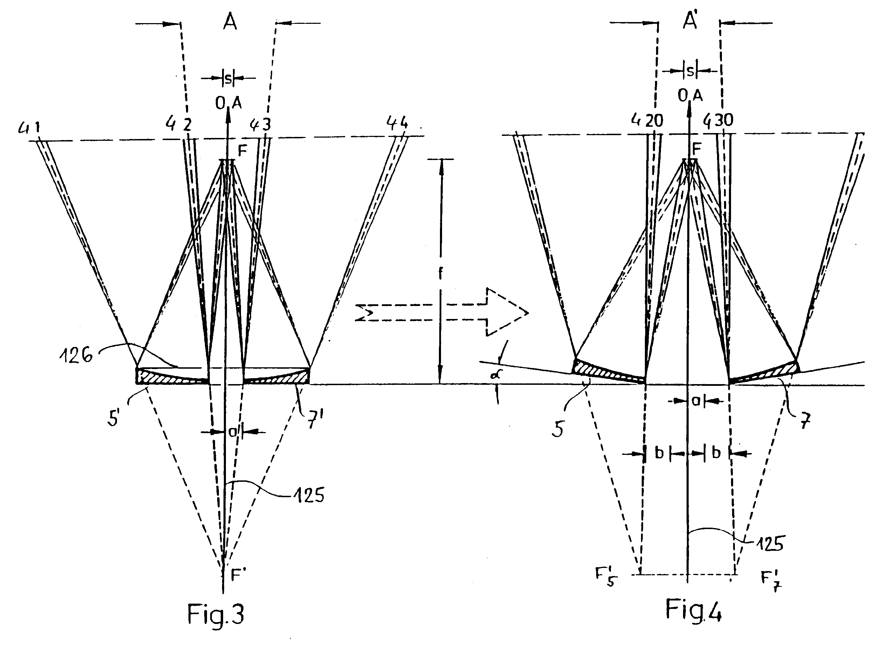

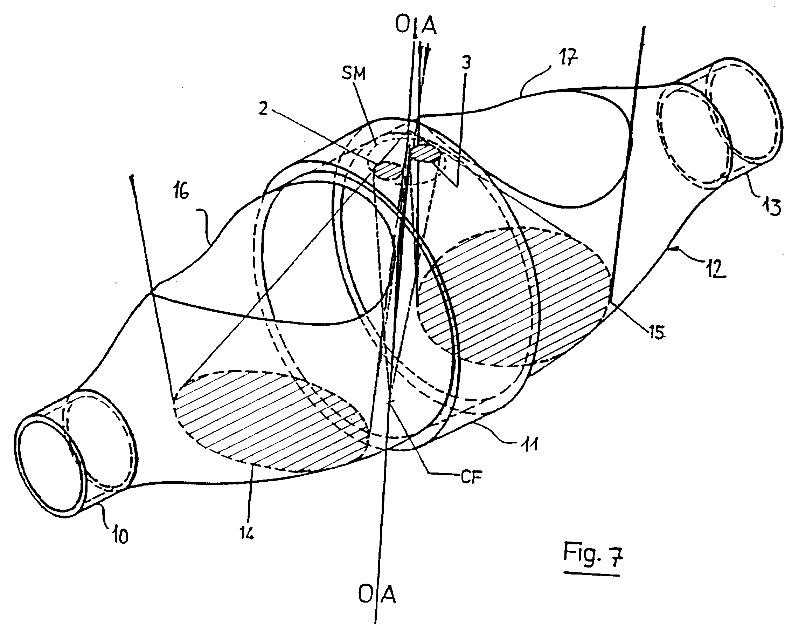

Eine koaxial zur Elevationsachse 120 angeordnete, ringförmige Ummantelung 11 dient zur Führung des Gehäuses und zur Stabilisierung der Drehbewegung um die Elevationsachse.
Das optische System des Spiegelteleskopes umfaßt neben den beiden Primärspiegeln 5, 7 zwei separate Sekundär-Umlenkspiegel 2, 3 sowie zwei separate Tertiär-Umlenkspiegel 6, die in der Weise angeordnet sind, daß die Strahlung beider Primärspiegel 5, 7 auf einen gemeinsamen Nasmith-Fokus 4 in der Elevationsachse 120 gebündelt wird.
Bei den beiden Primärspiegeln 5, 6 und den jeweils zugeordneten Sekundär-Umlenkspiegeln 2, 3 handelt es sich um sog. Off-Axis-Spiegel, d. h. ihre Oberflächen stellen Flächenausschnitte eines hypothetischen großen, asphärischen Spiegelkörpers 126 (Fig. 3); SM (Fig. 7) dar. Der Bereich der einfallenden Strahlung ist mit 123 bzs. 124 bezeichnet und die virtuellen Brennpunkte sowie der Primärfokus sind mit den Bezugszeichen 8, 9 bzw. 1 versehen. Die beiden tertiären Umlenkspiegel 6 sind im Unterschied zu den Sekundär-Umlenkspiegeln 2, 3 plan ausgebidet.

Als Primärspiegel kommen sog. Off-Axis-Reflektoren in Frage. Am Beispiel zweier Off-Axis-Hyperbol-Reflektoren ist aus der Draufsicht gemäß Fig. 2 in Lichteinfallsrichtung der Bereich 14, 15 der Reflexion für die Primärspiegel 5, 6 ersichtlich, der jeweils schraffiert dargestelt ist.

Weitere Einzelheiten der optischen Einrichtung werden danach nachfolgend anhand der Figuren 3 und 4 erläutert. Die Darstellung gemäß Fig. 3 dient hierbei lediglich zur Erläuterung der in der Fig. 4 dargestellten endgültigen Situation der Primärspiegel 5, 6 im Spiegelträgersystem 12. Anders ausgedrückt ist in der Fig. 3 lediglich eine für die endgültige Konzeption zweckmäßige Zwischenüberlegung dargestellt, wenn zwei Off-Axis-Hyperbol-Reflektoren zum Einsatz kommen.

Gemäß diesem gedanklichen Zwischenschritt sind die beiden Primärspiegel 5′, 7′ mit den einander zugewandten Rändern jeweils in einem vorgegebenen Abstand a von der gemeinsamen optischen Achse (OA) 125 entfernt. Die Fig. 3 zeigt ferner mit 126 denjenigen hypothetischen, asphärischen und rotationssymmetrisch ausgebildeten Primärspiegel, aus welchem die beiden Primärspiegel 5′, 7′ um den Abstand a versetzt zur optischen Achse 125 "herausgeschnitten" sind. Der hypothetische Brennpunkt des hypothetischen, asphärischen und rotationssymmetrischen Primärspiegels 126 ist mit F′ und seine äußeren Randstrahlen, die ein großes Öffnungsverhältnis veranschaulichen, sind mit 41 bzw. 44 bezeichnet. Sie stimmen an den einander abgewandten äußeren Rändern der Primärspiegel 5′, 7′ mit deren äußeren Randstrahlen überein. Die an den einander zugewandten Rändern der Primärspiegel 5′, 7′ einfallenden, inneren Randstrahlen sind mit 42 bzw. 43 bezeichnet. Sie begrenzen einen Totbereich A, der sich aus der paarweisen, einen Abstand einhaltenden Anordnung der beiden Primärspiegel 5′, 7′ ergibt. Die Bildebene (Fokus) F des hypothetischen Großspiegels ist systembedingt auch die gemeinsame Bildebene der beiden Primärspiegel 5′, 7′. Mit f ist die Brennweite des hypothetischen Großspiegels bzw. der Spiegelkombination der beiden Primärspiegel 5′, 7′ bezeichnet. Die Bildebene F weist ein Rastermaß s auf.

Die Grundkurven der beiden Primärspiegel 5′, 7′ sind vollkommen identisch, weil sie mit gleich großem Durchmesser und dem gleichen Abstand a von der optischen Achse des hypothetischen Großspiegels 126 entfernt aus diesem "herausgeschnitten" sind. In der Praxis sind die Primärspiegel 5′, 7′ zur Erzeugung von großflächigen Reflektoren aus einzelnen Segmenten zusammengesetzt (vgl. Fig. 7), die jeweils einzeln und in rechnerunterstützter Meß-Kopplung mit dem zugehörigen Sekundär-Umlenkspiegelsegment justierbar sind. Für erdgebundene Systeme können die Segmente aus Quarz hergestellt sein. Ihre Tragstruktur weist Hohlräume auf, die zur gezielten Temperaturkonstanthaltung von einem Fluid durchflutet werden können, wobei ein Kühlmittelaustausch über Bohrungen stattfinden kann.

Um die am Beispiel eines hypothetischen großen Hyperbolspiegels in Fig. 4 dargestellte Endlage zu erreichen, werden die Primärspiegel 5, 7 im Vergleich zu ihrer ursprünglichen hypothetischen Lage im hypothetischen Großspiegel 126 in einem Abstand b von der optischen Achse 125 angeordnet, der größer ist als der optische Abstand a. Außerdem sind die beiden Primärspiegel 5, 7 symmetrisch zur optischen Achse 125 jeweils um einen Winkel α zur optischen Achse 125 in der Weise geneigt, daß diejenigen Randstrahlen 420 bzw. 430, die der optischen Achse 15 am nächsten liegen, sich in einem Abstand auf ihr schneiden, der größer ist als die Brennweite f des hypothetischen großen Primärspiegels 126. Auf diese Weise wird der Totbereich A′ der Beobachtung eliminiert. Außerdem ergibt sich aus der Überlagerung der von beiden Primärspiegeln 5, 7 reflektierten Strahlen eine aus unterschiedlichen Winkeln durchgeführte Objektabbildung in der Fokalebene, welche innerhalb eines optimalen Bildrastermaßes ein Interferenzbild dieses Objektes ermöglicht. Beispielsweise ergibt sich bei einem Durchmesser der beiden Primärspiegel 5, 7 von jeweils 15 m eine Gesamt-Lichtintensität eines äquivalenten, einstückigen Primärspiegels mit 21,21 m Durchmesser.

In der Fig. 4 sind die hypothetischen Brennpunkte dieser beiden Primärspiegel 5, 7 mit F′₅ bzw. F′₇ bezeichnet, wenn es sich um Off-Axis-Hyperbolspiegel handelt. Sind die beiden Primärspiegel aus einem hypothetischen großen Parabolspiegel herausgeschnitten, so entfällt die Kippung um den Winkel α.

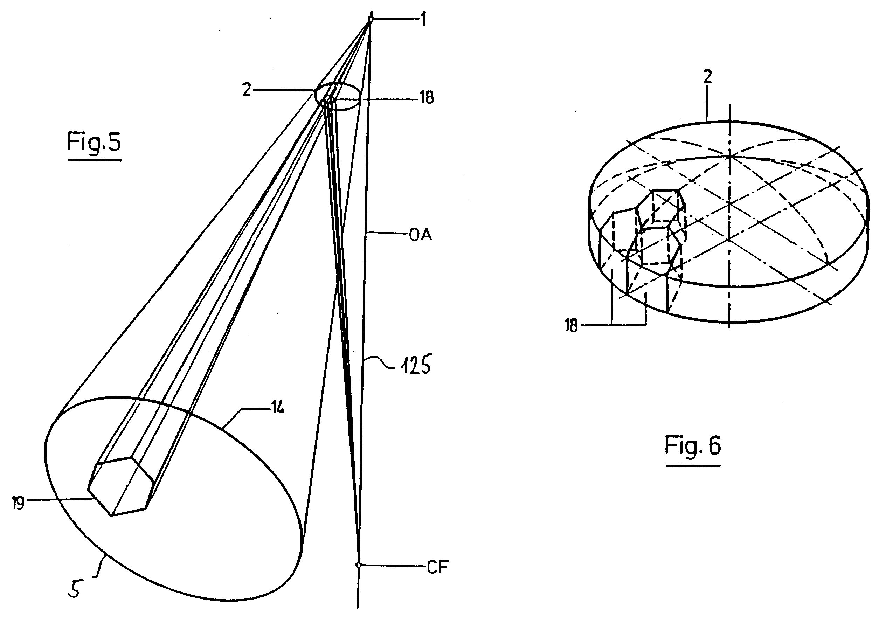

Sinngemäß in gleicher Weise, wie die Primärspiegel 5, 7 aus dem hypothetischen Großspiegel 176 abgeleitet sind, gehen auch die beiden Sekundär-Umlenkspiegel 2, 3 auf einen gemeinsamen hypothetischen Spiegel SM (Fig. 7) zurück, der erforderlich wäre, um das reflektierte Licht des hypothetischen Großspiegels 126 zum sog. Cassegrain- oder Nasmith-Fokus (oder anderen, weiteren gemeinsamen Brennpunkten) zu reflektieren. Die beiden Sekundär-Umlenkspiegel 2, 3 bestehen demnach aus Teilflächen einer konvex gekrümmten hypothetischen Spiegeloberfläche, die von deren optischen Achse beabstandet sind und die so bemessen sind, daß sie die Reflexionsstrahlen der Primärspiegel 5, 7 über die planen Tertiärspiegel 6 den gewünschten Brennpunkt 4 (Fig. 1) oder unmittelbar einen Cassegrain-Fokus CF auf der optischen Achse 125 (Fig. 5) erzeugen.

Die Fig. 5 veranschaulicht ferner am Beispiel eines Primärspiegels 5, daß nicht nur die beiden Primärspiegel aus separat ansteuerbaren und justierbaren, wabenförmigen Segmenten 19 zusamengesetzt sind, sondern auch unter Anpassung der Größenverhältnisse die Sekundär-Umlenkspiegel 2 bzw. 3, mit denen sie durch ein hochgenaues, nicht näher beschriebenes Meßsystem, welches rechnerunterstützt jede relative Lageveränderung des Primärspiegelsegmentes mißt und in Ist-Zeit eine Korrekturaßnahme auf die Positionierung des Sekundär-Umlenkspiegelsegmentes ermöglicht. Um die Darstellung übersichtlich zu halten, ist in der Fig. 5 jeweils nur ein einziges Segment 19 bzw. 18 im Primärspiegel 5 bzw. Sekundärspiegel 2 wiedergegeben.

Ergänzend zeigt die Fig. 6, auf welche Weise durch Aneinanderreihung von wabenförmigen Elementen 18 eine ununterbrochene Spiegelfläche erhalten wird. Die exakte Ausrichtung auf dem jeweiligen Brennpunkt erfolgt - wie o. g. - mittels rechnergesteuerter Aktuatoren.

Die Fig. 7 veranschaulicht in perspektivischer Darstellung, auf welche Weise eine Spiegelanordnung gemäß Fig. 5 zu einer paarweisen Anordnung ergänzt und innerhalb des Spiegelträgersystems 12 angeordnet ist. Der hypothetische Spiegel, aus welchem die beiden Sekundär-Umlenkspiegel 2, 3 abgeleitet sind, ist zur Ergänzung der vorstehenden Ausführungen in die Figur eingezeichnet und mit SM bezeichnet.

Die nachfolgend beschriebenen Figuren stehen im wesentlichen im Zusammenhang mit der drehbaren Lagerung des Spiegelträgersystems 12.

Gemäß Fig. 8 ist des spindelförmige Gehäuse des Spiegelträgersystems 12 in einer dichten, kreisrunden Wannne 22 auf einem Flüssigkeitsfilm gelagert. Der effektive Flüssigkeitslagerungsbereich ist mit 21 bezeichnet. Die Wanne 22 ist selbst wieder hydrostatisch in einem Betonbett in der Horizontalebene drehbar gelagert und mit einer ortsfesten, ringförmigen Betonummantelung 23 umgeben. Diese bildet zusammen mit einem äußeren Betonring 25 ein Fundament und eine konzentrische rührung für einen drehbar gelagerten Ring 24, welcher mit zwei Lagerschalen 20 für die Kreiszylinder 10,13 deß Spiegelträgersystems 12 versehen ist.

Sowohl der Ring 24, als auch die Wanne 22 sind jeweils separat hydrostatisch gelagert, so daß die Wirkung ihrer Eigenmassen vornachläßigbar wird. Außerdem sind der Ring 24 und die Wanne 22 jeweils mit einem Antrieb beaufschlagt über welchen sie in eine Rotationsbewegung in der Horizontalebene versetzt werden können. Beide Antriebe sind in der Weise elektronisch gekoppelt, daß der Ring 24 als Master bzw. als Referenz für die Schale 22 zur Kontrolle der Winkelgeschwindigkeit während einer gemeinsamen Rotation um die Elongationsachse des Spiegelerägersystems 12 dient. Durch die Betonummantelung 23 ist sichergestellt, daß die Drehantriebskräfte für den Ring 24 und die Wannne 22 einander nicht stören, sondern ohne unerwünschte gegenseitige Beeinflussung exakt kontrollierbar sind.

Bei diesen zwei separaten und elektronisch gekoppelten Lagerungs- und Antriebssystemen nimmt die Wannne 22 die Hauptlast des Spiegelträgersystems 12 auf. Die Lager 20 der Kreiszylinder 10,13 sind im Vergleich hierzu entlastet. Über sie wird auf diese Weise eine exakte Steuerung der sog. altazimutalen Nachführung am Himmel ermöglicht.

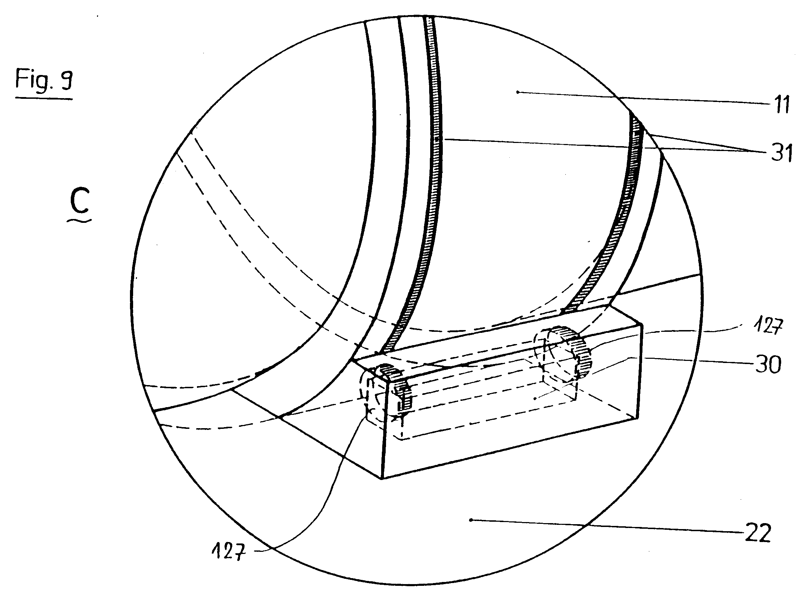

Für die Bewegung um die Elevationsachse 120 wird die ringförmige Ummantelung 11 des Spiegelträgersystems 12 mit einem weiteren Antrieb 30 (Fig. 9) versehen. Die Ummantelung 11 dient dabei auch zur Stabilisierung der Rotation des Spiegelträgersystems 12. Das Drehantriebsaggregat 30 ist dort angeordnet, wo das Spiegelträgersystem 12 in seine hydrostatische Lagerung in der Wanne 22 übergeht.

Wie die Fig. 9 veranschaulicht, umfaßt das Drehantriebsaggregat 30 zwei koaxiale Antriebsräder 127, beispielsweise Zahnräder, welche mit entsprechenden Gegenstücken bzw. vorgegebenen Spuren 31 auf der ringförmigen Ummantelung 11 zusammenwirken.

Die Figur 8 veranschaulicht ferner, daß das gesamte Spiegelträgersystem 12, die Wanne 22 und der Ring 24 zusammen mit der Betonummantelung 23 und dem Fundament 25 von einem als Witterungsschutz dienenden Kuppelbau (Schutzdom) 28 überdacht sind. Der Kuppelbnu 28 ist als flache Kugelkalotte ausgebildet und konzentrisch über der gesamten Anlage placiert. Er ist im Bereich von schlitzförmigen Öffnungen (nicht dargestellt), welche für den Lichteinfall erforderlich sind, von der Zenith-Position des Teleskops bis hin zur tiefsten Winkelpositioniorung der optischen Öffnungen zum Horizont mit einem einzigen Verschlußmechanismus wahlweise lückenlos verschließbar. Die Öffnungen sind schlitzförmig ausgebildet, so daß sich zwischen diesen Öffnungen eine zur Kugelkalotte gehörende Mantelfläche erstreckt. Der Verschlußmechanismus erfährt auf diese Weise eine Stabilisierung, weil die Überspannende Vercchlußbreite genau in der Mitte und längs des Verschlußweges eine feste Auflage bietet.

Der Kuppelbau 28 ist in einem ortsfesten Betonring 27 hydrostatisch in der Horizontalebene drehbar gelagert. Über die ringförmige Betonwand 27 wird die Masse des Kuppelbaus 28 ins Erdreich abgetragen.

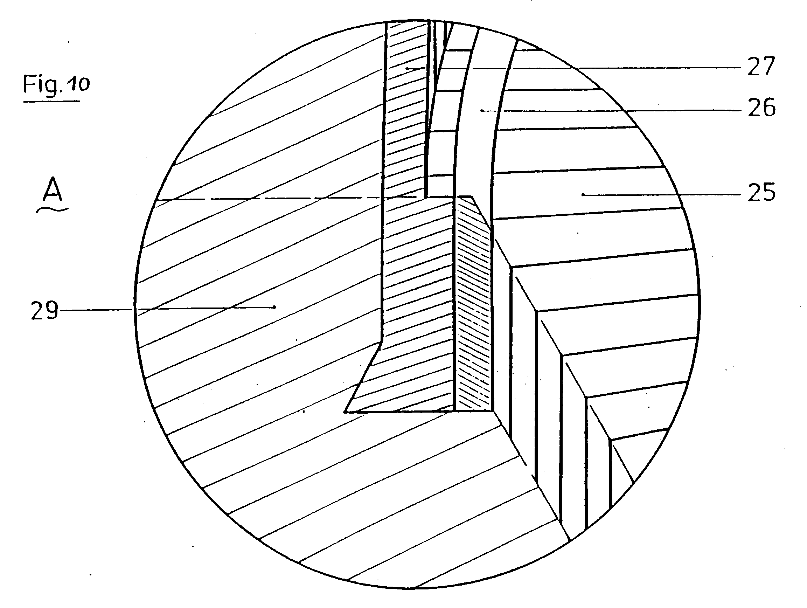

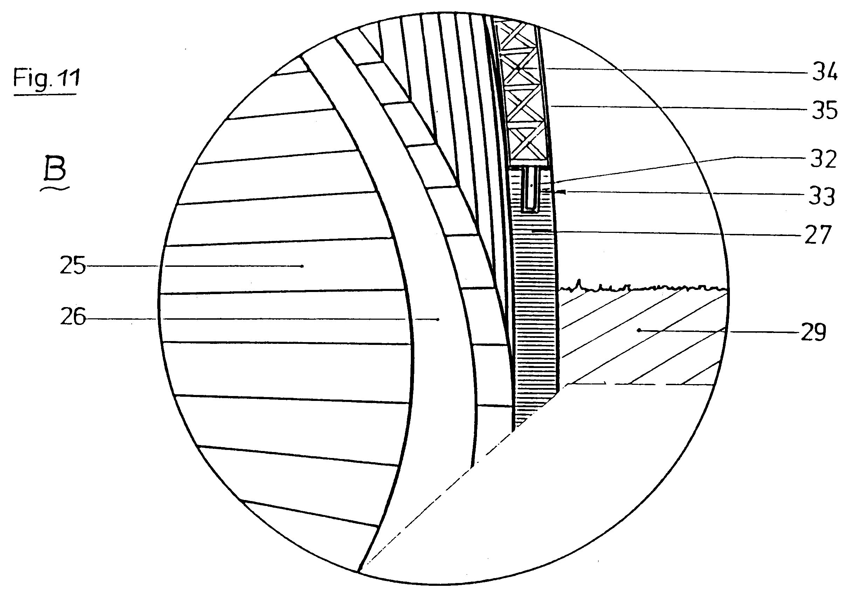

Wie die Figuren 10 und 11 im einzelnen zeigen, ist der Betonring 27 über starke, hartgummielastische Puffer 26, die kreisringförmig angeordnet sind, vom Fundament 25 getrennt. Mit 29 ist das Erdreich außerhalb der gesamten Anlage bezeichnet.

Der Kuppelbau 28 umfaßt ein Tragwerk 34 sowie eine Außenverkleidung 35. Die Führung in der ringförmigen Betonwand 27 erfolgt über ein Lagerbett 33 in der Stirnseite der Betonwand 27, in welches ein am Kuppelbau 28 angeordneter Hohlkörper 32 eingreift. Der Hohlkörper 32 und das Lagerbett 33 wirken in der Weise hydraulich oder pneumatisch zusammen, daß der Kuppelbau 28 im Ruhezustand auf der Stirnseite der Betonwand 27 fest aufliegt. Wenn der Kuppelbau 2 eine Rotationsbewegung ausführen soll, wird das Lager hydraulisch bzw. pneumatisch beaufschlagt, so daß eine reibungsarme Drehbewegung stattfinden kann.
Im übrigen ist im Inneren der Kreiszylinder 10,13 eine ständig horizontal ausgerichtete und vibrationsarm gelagerte Innenplattform angeordnet, die so weit ins Innere des Reflektorträgersystems 12 hineinragt, daß darauf die für den Nasmith-Fokus erforderlichen Instrumente und Geräte bedienungsfreundlich untergebracht werden können.

## Patentansprüche

1. Doppel-Reflektor mit zwei auf Abstand voneinander angeordneten und auf einen gemeinsamen Fokus ausgerichteten Primärspiegeln, die als Off-Axis-Reflektoren ausgebildet sind, welche jeweils in einem vorgegebenen Abstand von der optischen Achse aus einem hypothetischen Großspiegel herausgeschnitten sind, mit einem Sekundär-Umlenkspiegelsystem und mit einem Echtzeit-Meß- und Kompensationssystem für jeden der beiden Strahlengänge zur Erzielung einer möglichst optimalen Bildgüte durch eine Kompensation von Lagefehlern der Primärspiegel, dadurch **gekennzeichnet**,
daß die Primärspiegel (5,7) aus mehreren Einzelsegmenten bestehen,
daß das Sekundär-Umlenkspiegelsystem aus zwei Off-Axis-Teilspiegeln (2,3) einer konvex gekrümmten hypothetischen Spiegeloberfläche (SM) zusammengesetzt ist, die aus Einzelsegmenten bestehen, welche in ihrer Form dem verkleinerten Abbild der im Primärspiegel gegenüberliegenden, größeren Segmente entsprechen, und
daß das Echtzeit-Meß- und Kompensationssystem Aktuatoren umfaßt, die zur Kompensation von Lagefehlern der Primärspiegel (5,7) und der Sekundär-Umlenkspiegel unmittelbar an den einander zugeordneten Einzelsegmenten der Primärspiegel und der Sekundär-Umlenkspiegel angreifen.

2. Doppel-Reflektor nach Anspruch 1,
wobei der hypothetische Großspiegel ein Hyperbolspiegel ist,
dadurch **gekennzeichnet**,
daß die Einzelsegmente der Primärspiegel (5,7) um einen vorgegebenen Winkel bezüglich der gemeinsamen optischen Achse (125) geneigt sind, und daß die Abstände b der beiden Primärspiegel (5,7) von ihrer gemeinsamen optischen Achse (125) größer sind als ihre Abstände im hypothetischen Großspiegel (126) wären.

3. Doppel-Reflektor nach Anspruch 1 oder 2,
dadurch **gekennzeichnet**,
daß die Primär- und/oder Sekundärspiegel (5,7; 2,3) eine mit Hohlräumen versehene Tragstruktur aufweisen.

4. Doppel-Reflektor nach Anspruch 3,
dadurch **gekennzeichnet**,
daß Primär- und/oder Sekundärspiegel (5,7; 2,3) in den Hohlräumen zirkulierendes Kühlmittel enthalten.

5. Doppel-Reflektor nach einem der Ansprüche 1 bis 4,
dadurch **gekennzeichnet**,
daß die Primärspiegel (5,7), die Sekundär-Umlenkspiegel (2,3) sowie alle Betriebs- und Hilfsmittel auf einem gemeinsamen, selbsttragenden Träger (12) angeordnet sind, der großflächig in einer Wanne (22) hydrostatisch um seine Elevationsachse (120) und die gemeinsame optische Achse (125) drehbar gelagert ist.

## Claims

1. A double reflector, comprising two spaced apart primary mirrors oriented toward a common focus and designed as off-axis reflectors, mirrors cut out of a hypothetical big mirror at a predetermined distance from the optical axis, further comprising a secondary deflector mirror-system and a real time measuring and compensating system for both of the beam path to achieve optimum image quality, as best as possible, by compensating positional errors of the primary mirrors, characterized in that the primary mirrors (5, 7) consist of a plurality of individual segments, in that the secondary deflector mirror-system is composed of two partial off-axis mirrors (2, 3) of a convexly curved hypothetical mirror surface (SM) consisting of individual segments which correspond in shape to the reduced replica of the opposed greater segments in the primary mirror, and in that the real time measuring and compensating system comprises actuators which directly engage the mutually coordinated individual segments of the primary mirrors and of the secondary deflector mirror to compensate positional errors of the primary mirrors (5, 7).

2. The double reflector as claimed in claim 1, with the hypothetical big mirror being a hyperbolical mirror, characterized in that the individual segments of the primary mirrors (5, 7) are inclined by a predetermined angle with respect to the common optical axis (125), and in that the spacings b of the two primary mirrors (5, 7) from their common optical axis (125) are greater than their spacings in the hypothetical big mirror (126) would be.

3. The double reflector as claimed in claim 1 or 2, characterized in that the primary and/or secondary mirrors (5, 7; 2, 3) comprise a support structure provided with cavities.

4. The double reflector as claimed in claim 3, characterized in that primary and/or secondary mirrors (5, 7; 2, 3) are acted upon by a coolant which circulates in the cavities.

5. The double reflector as claimed in one of claims 1 to 4, characterized in that the primary mirrors (5 7), the secondary deflector mirrors (2, 3) and all the operating and auxiliary means are arranged on a common self-supporting support member (12) which is supported hydrostatically over a large surface area in a tray (22) so as to be rotatable about its axis of elevation (120) and the common optical axis (125).

## Revendications

1. Réflecteur double comportant deux miroirs primaires distants l'un de l'autre et alignés sur un foyer commun, miroir en forme de réflecteurs désaxés qui sont découpés d'un miroir géant, imaginaire, à une distance prédéterminée de l'axe optique, avec un système de miroirs de renvoi secondaires et un système de mesure de temps réel et de compensation pour chacun des deux faisceaux lumineux, pour arriver à une qualité d'image aussi optimale que possible par une compensation des défauts de position des miroirs primaires, caractérisé en ce que les miroirs primaires (5, 7) se composent de plusieurs segments séparés, le système de miroirs de renvoi secondaires se compose de deux miroirs partiels désaxés (2, 3) appartenant à une surface de miroir (SM), imaginaire, à courbure convexe, formée de segments séparés, dont la forme correspond à la copie réduite des segments plus grands, en regard dans le miroir primaire et en ce que le système de mesure et de compensation du temps réel comprend des actionneurs qui agissent pour compenser les défauts de position des miroirs primaires (5, 7) et des miroirs de renvoi secondaires, directement au niveau des segments séparés associés entre eux des miroirs primaires et des miroirs de renvoi secondaires.

2. Réflecteur double selon la revendication 1, caractérisé en ce que le miroir géant, imaginaire, est un miroir hyperbolique, caractérisé en ce que les différents segments du miroir primaire (5, 7) sont inclinés d'un angle prédéterminé par rapport à l'axe optique commun (125) et la distance (b) des deux miroirs primaires (5, 7) par rapport à leur axe optique commun (125) est plus grande que ne le serait leur écartement dans le miroir géant imaginaire (126).

3. Réflecteur double selon la revendication 1 ou 2, caractérisé en ce que les miroirs primaires et/ou secondaires (5, 7 ; 2, 3) présentent une structure de support munie de cavités.

4. Réflecteur double selon la revendication 3, caractérisé en ce que les miroirs primaires et/ou secondaires (5, 7 ; 2, 3) contiennent un agent de refroidissement circulant dans les cavités.

5. Réflecteur double selon l'une des revendications 1 à 4, caractérisé en ce que les miroirs primaires (5, 7), les miroirs secondaires de renvoi (2, 3) ainsi que tous les moyens de fonctionnement et moyens auxiliaires sont montés sur un seul support commun autoporteur (12), lui-même monté, par l'intermédiaire d'une grande surface, dans une cuvette (22), de manière hydrostatique autour d'un axe d'élévation (120) et l'axe optique commun (125) est monté à rotation.
